(19) 

**Europäisches Patentamt**
**European Patent Office**
**Office européen des brevets**

(11) **EP 4 506 486 A1**

(12) **EUROPEAN PATENT APPLICATION**
published in accordance with Art. 153(4) EPC

(43) Date of publication:
**12.02.2025  Bulletin 2025/07**

(21) Application number: **23784801.5**

(22) Date of filing: **06.04.2023**

(51) International Patent Classification (IPC):
$C23C\ 22/00^{(2006.01)}$    $C21D\ 8/12^{(2006.01)}$
$C21D\ 9/46^{(2006.01)}$    $C22C\ 38/00^{(2006.01)}$
$C22C\ 38/60^{(2006.01)}$

(52) Cooperative Patent Classification (CPC):
**C21D 8/12; C21D 9/46; C22C 38/00; C22C 38/60;**
**C23C 22/00; Y02P 10/20**

(86) International application number:
**PCT/JP2023/014239**

(87) International publication number:
**WO 2023/195517 (12.10.2023 Gazette 2023/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **06.04.2022  JP 2022063397**

(71) Applicant: **NIPPON STEEL CORPORATION**
**Chiyoda-ku**
**Tokyo 100-8071 (JP)**

(72) Inventors:
• **TAKEDA Kazutoshi**
  **Tokyo 100-8071 (JP)**
• **KATAOKA Takashi**
  **Tokyo 100-8071 (JP)**
• **TAKATANI Shinsuke**
  **Tokyo 100-8071 (JP)**
• **KOGAKURA Yuuki**
  **Tokyo 100-8071 (JP)**
• **KUNITA Yuki**
  **Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTRICAL STEEL SHEET AND FORMATION METHOD FOR INSULATING COATING FILM**

(57)    This grain-oriented electrical steel sheet has: a base steel sheet; and an insulating coating formed on a surface of the base steel sheet, in which the insulating coating has: an intermediate layer formed on the base steel sheet side and containing an amorphous iron phosphate; and a tension coating layer formed on a surface side of the insulating coating, the intermediate layer has an average thickness of 0.10 to 3.0 μm, the tension coating layer contains a metal phosphate and silica, and the amount of the silica in the tension coating layer is 20 to 60 mass%.

**EP 4 506 486 A1**

**Description**

Technical Field of the Invention

The present invention relates to a grain-oriented electrical steel sheet and a method for forming an insulating coating.

The present application claims priority based on Japanese Patent Application No. 2022-063397 filed in Japan on April 06, 2022, the contents of which are incorporated herein by reference.

Related Art

A grain-oriented electrical steel sheet is mainly used for a transformer. The transformer is continuously magnetized for a long period of time from installation to disposal and continues to generate energy loss. Therefore, energy loss when the transformer is magnetized by alternating current, that is, iron loss is a main index for determining performance of the transformer.

In order to reduce iron loss of the grain-oriented electrical steel sheet, many techniques have been developed so far from a viewpoint of (a) increasing development in the {110}<001> orientation (Goss orientation), (b) increasing the amount of a solid solution element such as Si to increase electric resistance of the steel sheet, or (c) reducing the sheet thickness of the electrical steel sheet.

In addition, applying tension to the steel sheet is effective for reducing iron loss. It is an effective means for reducing iron loss to form a coating made of a material having a thermal expansion coefficient smaller than that of the steel sheet on a sheet surface at a high temperature. A forsterite film (inorganic coating) having excellent coating adhesion, generated by a reaction between an oxide on a sheet surface and an annealing separator in a final annealing step of an electrical steel sheet is a coating capable of applying tension to the steel sheet.

For example, a method for forming an insulating coating by baking a coating liquid mainly containing colloidal silica and a phosphate on a sheet surface, disclosed in Patent Document 1 is an effective method for reducing iron loss because the method has a large effect of applying tension to the steel sheet. Therefore, a general method for manufacturing a grain-oriented electrical steel sheet is to leave the forsterite film generated in the final annealing step and to form an insulating coating mainly containing a phosphate on the forsterite film.

However, in recent years, there has been an increasing demand for miniaturization and high performance of a transformer, and in order to miniaturize the transformer, a grain-oriented electrical steel sheet is required to have excellent high magnetic field iron loss such that iron loss is favorable even when magnetic flux density is high. At the same time, in recent years, it has been clarified that the forsterite film hinders movement of a domain wall and adversely affects iron loss. In a grain-oriented electrical steel sheet, a magnetic domain changes by movement of a domain wall under an alternating magnetic field. Smooth and rapid movement of the domain wall is effective for reducing iron loss, but the forsterite film itself is a non-magnetic body and has an uneven structure at a steel sheet/coating interface, and this uneven structure hinders movement of the domain wall. Therefore, it is considered that the forsterite film adversely affects iron loss.

Therefore, as a means for improving high magnetic field iron loss, a method for removing an inorganic coating by using a mechanical means such as polishing or a chemical means such as pickling, a technique for manufacturing a grain-oriented electrical steel sheet having no inorganic coating by preventing generation of an inorganic coating in high-temperature final annealing, and a technique for bringing a sheet surface into a mirror surface state (in other words, a technique for magnetically smoothing a sheet surface) have been studied.

As a technique for preventing generation of an inorganic coating, for example, Patent Document 2 discloses a technique in which a surface-formed product is removed by pickling after normal final annealing, and then a sheet surface is brought into a mirror surface state by chemical polishing or electrolytic polishing. It has been found that a better iron loss improving effect can be obtained by forming a tension-applying insulating coating on a surface of a grain-oriented electrical steel sheet without an inorganic coating, obtained by such a known method. In addition, the tension-applying insulating coating can impart various characteristics such as corrosion resistance, heat resistance, and slippage in addition to improvement of iron loss.

However, the inorganic coating has an effect of exhibiting insulation properties and an effect as an intermediate layer for ensuring adhesion when a tension coating (tension-applying insulating coating) is formed. That is, since the inorganic coating is formed in a state of deeply entering the steel sheet, the inorganic coating is excellent in adhesion to the steel sheet which is metal. Therefore, when a tension-applying type coating (tension coating) containing colloidal silica, a phosphate, or the like as a main component is formed on a surface of the inorganic coating, coating adhesion is excellent. On the other hand, since it is generally difficult to bond metal and an oxide to each other, it is difficult to ensure sufficient adhesion between the tension coating and a surface of an electrical steel sheet (base steel sheet) when the inorganic coating is not present.

Therefore, in a case where a tension coating is formed on a grain-oriented electrical steel sheet having no inorganic coating, it has been studied to form a layer that plays a role as an intermediate layer instead of the inorganic coating.

For example, Patent Document 3 discloses a technique in which a grain-oriented electrical steel sheet having no inorganic coating is annealed in a weakly reducing atmosphere, and silicon inevitably contained in a silicon steel sheet is thermally oxidized selectively to form a $SiO_2$ layer on a sheet surface, and then a tension-applying type insulating coating is formed. Patent Document 4 discloses a technique in which a grain-oriented electrical steel sheet having no inorganic coating is subjected to an anodic electrolytic treatment in a silicate aqueous solution to form a $SiO_2$ layer on a sheet surface, and then a tension-applying type insulating coating is formed.

Patent Document 5 discloses a technique for ensuring adhesion of a tension-applying insulating coating by forming a coating to be an intermediate layer in advance when a tension-applying coating is formed.

Patent Document 6 discloses a grain-oriented electrical steel sheet including a base steel sheet and a tension-applying insulating coating, in which the tension-applying insulating coating is present on a surface of the grain-oriented electrical steel sheet, and an iron oxide layer having a thickness of 100 to 500 nm is present between the base steel sheet and the tension-applying insulating coating.

Citation List

Patent Document

Patent Document 1
Japanese Unexamined Patent Application, First Publication No. S48-39338
Patent Document 2
Japanese Unexamined Patent Application, First Publication No. S49-96920
Patent Document 3
Japanese Unexamined Patent Application, First Publication No. H6-184762
Patent Document 4
Japanese Unexamined Patent Application, First Publication No. H11-209891
Patent Document 5
Japanese Unexamined Patent Application, First Publication No. H5-279747
Patent Document 6
Japanese Unexamined Patent Application, First Publication No. 2020-111814

Summary of Invention

Problems to be Solved by the Invention

However, in the technique disclosed in Patent Document 3, it is necessary to prepare an annealing facility capable of controlling an atmosphere in order to perform annealing in a weakly reducing atmosphere, and there is a problem in treatment cost. In the technique disclosed in Patent Document 4, it is necessary to prepare a new electrolysis treatment facility in order to obtain a $SiO_2$ layer that maintains sufficient adhesion to a tension-applying type insulating coating on a sheet surface by performing an anodic electrolytic treatment in a silicate aqueous solution, and there is a problem in treatment cost.

In the technique disclosed in Patent Document 5, there is a problem that a tension-applying insulating coating having a large tension cannot be held with good adhesion.

In the technique disclosed in Patent Document 6, in order to form an iron oxide layer, a grain-oriented electrical steel sheet after surface treatment is heat-treated at a steel sheet temperature of 700 to 900°C for 5 to 60 seconds in an atmosphere having an oxygen concentration of 1 to 21 vol% and a dew point of -20 to 30°C. Therefore, in a case where a steel sheet having an inorganic coating is manufactured in the same line, it is necessary to change an atmosphere of an annealing furnace, and workability is poor.

As described above, it has been difficult to provide a grain-oriented electrical steel sheet that has no forsterite film, is excellent in coating adhesion, has a high coating tension, and is excellent in magnetic characteristics on the premise of facility restrictions and a method that does not deteriorate workability.

Therefore, an object of the present invention is to provide a grain-oriented electrical steel sheet that has no forsterite film, is excellent in coating adhesion, is excellent in coating tension, is excellent in magnetic characteristics, and further has sufficient corrosion resistance and elution resistance. Another object of the present invention is to provide a method for forming an insulating coating included in such a grain-oriented electrical steel sheet.

Means for Solving the Problem

The present inventors have studied the above problems. As a result, the present inventors have found that, in a grain-oriented electrical steel sheet having no forsterite film on a surface thereof, when an intermediate layer containing an amorphous iron phosphate is formed between a base steel sheet and a tension coating, coating adhesion, coating tension, and magnetic characteristics can be improved while sufficient corrosion resistance and elution resistance are obtained.

The present invention has been made on the basis of the above-described findings. The gist of the present invention is as follows.

[1] A grain-oriented electrical steel sheet according to an aspect of the present invention has: a base steel sheet; and an insulating coating formed on a surface of the base steel sheet, in which the insulating coating has: an intermediate layer formed on the base steel sheet side and containing an amorphous iron phosphate; and a tension coating layer formed on a surface side of the insulating coating, the intermediate layer has an average thickness of 0.10 to 3.0 $\mu$m, the tension coating layer contains a metal phosphate and silica, and an amount of the silica in the tension coating layer is 20 to 60 mass%.

[2] A method for forming an insulating coating according to another aspect of the present invention is a method for forming the insulating coating included in the grain-oriented electrical steel sheet according to [1], the method including: a final annealing step of applying an annealing separator containing 10 to 100 mass% of $Al_2O_3$ to a steel sheet, drying the annealing separator, and then performing final annealing; an annealing separator removing step of removing an excess of the annealing separator from a surface of the steel sheet after the final annealing step by water washing; a light pickling step of pickling the steel sheet after the annealing separator removing step with a mixed acid of two or more types obtained by mixing one or more selected from sulfuric acid, phosphoric acid, and nitric acid, having a liquid temperature of 25 to 85°C, and having a concentration of 0.5 to 10 mass% for 5 to 30 seconds; an immersion step of immersing the steel sheet after the light pickling step in a treatment liquid having a liquid temperature of 20 to 70°C and having a phosphoric acid concentration of 2.0 to 15.0 mass% for 5 to 50 seconds; a drying step of pulling up the steel sheet after the immersion step from the treatment liquid, removing an excess of the treatment liquid by water washing, and then drying the steel sheet; and a tension coating layer forming step of applying, to the steel sheet after the drying step, a coating liquid containing a metal phosphate and colloidal silica such that the colloidal silica is contained in an amount of 50 to 150 parts by mass with respect to 100 parts by mass of the metal phosphate, drying the coating liquid, and then holding the steel sheet at a sheet temperature of 700 to 950°C for 10 to 50 seconds.

[3] In the method for forming an insulating coating according to [2], the annealing separator may further contain one or both selected from 5 to 90 mass% of MgO and 0.5 to 10.0 mass% of chloride.

[4] A grain-oriented electrical steel sheet according to still another aspect of the present invention has: a base steel sheet; and an amorphous iron phosphate layer on a surface of the base steel sheet, and the amorphous iron phosphate layer has an average thickness of 0.10 to 3.0 $\mu$m.

Effects of the Invention

According to the above aspect of the present invention, it is possible to provide a grain-oriented electrical steel sheet that has no forsterite film, is excellent in coating adhesion, is excellent in coating tension, and is excellent in magnetic characteristics. This grain-oriented electrical steel sheet also has sufficient corrosion resistance and elution resistance. In addition, according to the above aspect of the present invention, it is possible to provide a method for forming an insulating coating included in the grain-oriented electrical steel sheet.

Brief Description of the Drawing

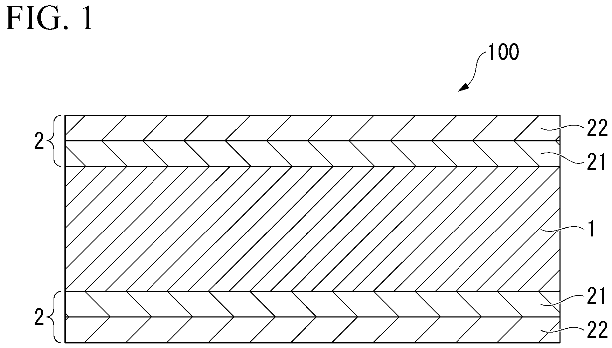

FIG. 1 is a view illustrating an example of a cross-sectional view of a grain-oriented electrical steel sheet according to the present embodiment.

Embodiment of the Invention

A grain-oriented electrical steel sheet according to an embodiment of the present invention (grain-oriented electrical steel sheet according to the present embodiment) and a method for manufacturing the grain-oriented electrical steel sheet according to the present embodiment, including a method for forming an insulating coating included in the grain-oriented electrical steel sheet according to the present embodiment, will be described.

First, the grain-oriented electrical steel sheet according to the present embodiment will be described.

As illustrated in FIG. 1, a grain-oriented electrical steel sheet 100 according to the present embodiment has a base steel sheet 1 and an insulating coating 2 formed on a surface of the base steel sheet 1. Since the surface of the base steel sheet 1 does not have a forsterite film, the insulating coating 2 is in direct contact with the base steel sheet 1.

The insulating coating 2 has a tension coating layer 22 formed on a surface side of the insulating coating 2 (that is, a surface side of the grain-oriented electrical steel sheet 100), and an intermediate layer 21 formed on the base steel sheet 1 side and containing an amorphous iron phosphate. In FIG. 1, the insulating coatings 2 are formed on both surfaces of the base steel sheet 1, but the insulating coating 2 may be formed only on one surface.

<Base steel sheet>

(Chemical composition)

The grain-oriented electrical steel sheet 100 according to the present embodiment has a significant feature in the structure of the insulating coating 2 formed on the surface of the base steel sheet 1. The chemical composition of the base steel sheet 1 included in the grain-oriented electrical steel sheet 100 is not limited, and may be in a range of a known grain-oriented electrical steel sheet. For example, in order to obtain characteristics generally required for a grain-oriented electrical steel sheet, the base steel sheet 1 preferably contains the following components as a chemical composition. In the present embodiment, % relating to the chemical composition is mass% unless otherwise specified.

C: 0.010% or less

C (carbon) is an element effective in controlling a microstructure of a steel sheet in steps up to completion of a decarburization annealing step in a manufacturing process. However, when the C content of a base steel sheet of a finally obtained grain-oriented electrical steel sheet exceeds 0.010%, magnetic characteristics of the grain-oriented electrical steel sheet are deteriorated. Therefore, in the base steel sheet of the grain-oriented electrical steel sheet according to the present embodiment, the C content is preferably set to 0.010% or less. The C content is more preferably 0.005% or less. The C content is preferably as low as possible, but even when the C content is reduced to less than 0.0001%, a microstructure control effect is saturated, and manufacturing cost is merely increased. Therefore, the C content may be 0.0001% or more.

Si: 2.50 to 4.00%

Si (silicon) is an element that increases electric resistance of a grain-oriented electrical steel sheet and improves iron loss characteristics. When the Si content is less than 2.50%, a sufficient eddy-current loss reducing effect cannot be obtained. Therefore, the Si content is preferably set to 2.50% or more. The Si content is more preferably 2.70% or more, and still more preferably 3.00% or more.

On the other hand, when the Si content exceeds 4.00%, the grain-oriented electrical steel sheet is embrittled, and passability is significantly deteriorated. In addition, workability of the grain-oriented electrical steel sheet is deteriorated, and the steel sheet may be fractured during rolling. Therefore, the Si content is preferably set to 4.00% or less. The Si content is more preferably 3.80% or less, and still more preferably 3.70% or less.

Mn: 0.01 to 0.50%

Mn (manganese) is an element that is bonded to S in a manufacturing process to form MnS. This precipitate functions as an inhibitor (inhibitor of normal grain growth) and causes secondary recrystallization in steel. Mn is also an element that enhances the hot workability of steel. When the Mn content is less than 0.01%, the above effect cannot be sufficiently obtained. Therefore, the Mn content is preferably set to 0.01% or more. The Mn content is more preferably 0.02% or more.

On the other hand, when the Mn content exceeds 0.50%, secondary recrystallization does not occur, and magnetic characteristics of steel are deteriorated. Therefore, in the base steel sheet of the grain-oriented electrical steel sheet according to the present embodiment, the Mn content is preferably set to 0.50% or less. The Mn content is more preferably 0.20% or less, and still more preferably 0.10% or less.

N: 0.010% or less

N (nitrogen) is an element that is bonded to Al in a manufacturing process to form AlN that functions as an inhibitor. However, when the N content exceeds 0.010%, the inhibitor excessively remains in the grain-oriented electrical steel sheet. In this case, magnetic characteristics are deteriorated. Therefore, in the base steel sheet of the grain-oriented electrical steel sheet according to the present embodiment, the N content is preferably set to 0.010% or less. The N content is more preferably 0.008% or less.

On the other hand, a lower limit of the N content is not particularly limited, but even when the N content is reduced to less than 0.001%, manufacturing cost is merely increased. Therefore, the N content may be 0.001% or more.

Sol. Al: 0.020% or less

Sol. Al (acid-soluble aluminum) is an element that is bonded to N in a grain-oriented electrical steel sheet manufacturing process to form AlN that functions as an inhibitor. However, when the sol. Al content in the base steel sheet exceeds 0.020%, the inhibitor excessively remains in the base steel sheet. In this case, magnetic characteristics are deteriorated. Therefore, in the base steel sheet of the grain-oriented electrical steel sheet according to the present embodiment, the sol. Al content is preferably set to 0.020 or less. The sol. Al content is more preferably 0.010% or less, and still more preferably less than 0.001%. The lower limit of the sol. Al content is not particularly limited, and even when the content is reduced to less than 0.0001%, the manufacturing cost is merely increased. Therefore, the sol. Al content may be 0.0001% or more.

S: 0.010% or less

S (sulfur) is an element that is bonded to Mn in a manufacturing process to form MnS that functions as an inhibitor. However, when the S content exceeds 0.010%, the remaining inhibitor deteriorates magnetic characteristics. Therefore, in the base steel sheet of the grain-oriented electrical steel sheet according to the present embodiment, the S content is preferably set to 0.010% or less. The S content in the grain-oriented electrical steel sheet is more preferably as low as possible. For example, the S content is less than 0.001%. However, even when the S content in the grain-oriented electrical steel sheet is reduced to less than 0.0001%, manufacturing cost is merely increased. Therefore, the S content in the grain-oriented electrical steel sheet may be 0.0001% or more.

Remainder: Fe and impurities

The chemical composition of the base steel sheet of the grain-oriented electrical steel sheet according to the present embodiment may contain the above-described elements, with the remainder of Fe and impurities. However, the base steel sheet may further contain Sn, Cu, Se, and Sb in the following ranges for the purpose of improving magnetic characteristics and the like. In addition, for example, even when the base steel sheet contains any one or more selected from W, Nb, Ti, Ni, Co, V, Cr, and Mo in a total amount of 1.0% or less as elements other than these elements, the effect of the grain-oriented electrical steel sheet according to the present embodiment is not impaired.

Here, the impurity is an element that is a contaminant derived from ore or scrap as a raw material, a manufacturing environment, or the like when the base steel sheet is industrially manufactured, and means an element that is allowed to be contained in a content that does not adversely affect the effect of the grain-oriented electrical steel sheet according to the present embodiment.

Sn: 0 to 0.50%

Sn (tin) is an element that contributes to improvement of magnetic characteristics through primary recrystallization structure control. In order to obtain an effect of improving magnetic characteristics, the Sn content is preferably set to 0.01% or more. The Sn content is more preferably 0.02% or more, and still more preferably 0.03% or more.

On the other hand, when the Sn content exceeds 0.50%, secondary recrystallization is unstable, and magnetic characteristics are deteriorated. Therefore, the Sn content is preferably set to 0.50% or less. The Sn content is more preferably 0.30% or less, and still more preferably 0.10% or less.

Cu: 0 to 0.50%

Cu (Copper) is an element that contributes to an increase in Goss orientation occupancy in a secondary recrystallization structure. In order to obtain the above effect, the Cu content is preferably set to 0.01% or more. The Cu content is more preferably 0.02% or more, and still more preferably 0.03% or more.

On the other hand, when the Cu content exceeds 0.50%, the steel sheet is embrittled during hot rolling. Therefore, in the base steel sheet of the grain-oriented electrical steel sheet according to the present embodiment, the Cu content is preferably set to 0.50% or less. The Cu content is more preferably 0.30% or less, and still more preferably 0.10% or less.

Se: 0 to 0.020%

Se (selenium) is an element having an effect of improving magnetic characteristics. When Se is contained, the Se content is preferably set to 0.001% or more such that Se favorably exhibits the effect of improving magnetic characteristics. The Se content is more preferably 0.003% or more, and still more preferably 0.006% or more.

On the other hand, when the Se content exceeds 0.020%, adhesion of a coating is deteriorated. Therefore, the Se content is preferably set to 0.020% or less. The Se content is more preferably 0.015% or less, and still more preferably 0.010% or less.

Sb: 0 to 0.50%

Sb (Antimony) is an element having an effect of improving magnetic characteristics. When Sb is contained, the Sb content is preferably set to 0.005% or more such that Sb favorably exhibits the effect of improving magnetic characteristics. The Sb content is more preferably 0.01% or more, and still more preferably 0.02% or more.

On the other hand, when the Sb content exceeds 0.50%, adhesion of a coating is significantly deteriorated. Therefore, the Sb content is preferably set to 0.50% or less. The Sb content is more preferably 0.30% or less, and still more preferably 0.10% or less.

As described above, for example, the chemical composition of the base steel sheet of the grain-oriented electrical steel sheet according to the present embodiment contains the above-described elements, with the remainder of Fe and impurities.

The chemical composition of the base steel sheet of the grain-oriented electrical steel sheet according to the present embodiment can be measured using a known ICP emission spectrometry. Note that, at the time of measurement, in a case where an insulating coating is formed on a surface, the measurement is performed after the insulating coating is peeled off. As a peeling method, it is possible to peel off the insulating coating by immersing the base steel sheet with the insulating coating in a high-concentration alkaline solution (for example, a 30% sodium hydroxide solution heated to 85°C) for 20 minutes or more. It is possible to visually determine whether or not the insulating coating has been peeled off. In a case of a small sample, the insulating coating may be peeled off by surface grinding.

<Insulating coating>

In the grain-oriented electrical steel sheet 100 according to the present embodiment, the insulating coating 2 is formed on a surface of the base steel sheet 1. More specifically, since the grain-oriented electrical steel sheet 100 according to the present embodiment has no forsterite film, the insulating coating 2 is formed in contact with the base steel sheet 1.

The insulating coating 2 includes the intermediate layer 21 and the tension coating layer 22 in this order from the base steel sheet 1 side.

(Intermediate layer)

The intermediate layer 21 is a layer (coating) containing an amorphous iron phosphate and having an average thickness of 0.10 to 3.0 μm.

As described above, in general, a grain-oriented electrical steel sheet has a forsterite film generated in a final annealing step and an insulating coating (tension insulating coating) formed thereon. However, in recent years, it has been clarified that the forsterite film hinders movement of a domain wall and adversely affects iron loss, and thus, in order to further improve magnetic characteristics, a grain-oriented electrical steel sheet without the forsterite film has been studied. However, when the forsterite film is not present, it is difficult to ensure sufficient adhesion between a tension coating and a base steel sheet.

In the grain-oriented electrical steel sheet 100 according to the present embodiment, the intermediate layer 21 containing an amorphous iron phosphate is formed between the base steel sheet 1 and the tension coating layer 22 to improve adhesion between the base steel sheet 1 and the tension coating layer 22 via the intermediate layer 21.

This is because when the intermediate layer 21 contains an amorphous iron phosphate, affinity is high and adhesion between the intermediate layer and the tension coating layer is excellent because the tension coating (which becomes the tension coating layer 22 after formation) formed on the intermediate layer 21 also contains a metal phosphate. In addition, as described later, when the intermediate layer is formed by immersion in a treatment liquid containing phosphoric acid, the intermediate layer can be formed on a surface of the base steel sheet 1 using a chemical reaction, and adhesion between the intermediate layer 21 and the base steel sheet 1 can also be ensured.

When the intermediate layer 21 contains an amorphous iron phosphate, there is an advantage in that the entire surface of the steel sheet is easily covered even with a thinner intermediate layer as compared with a case where the intermediate layer is a metal phosphate.

In the present embodiment, inclusion of an amorphous iron phosphate in the intermediate layer means that the intermediate layer is determined to be amorphous as a result of X-ray diffraction, and the amount of iron phosphate in the intermediate layer is 30 mass% or more as described later. The amount of the amorphous iron phosphate in the intermediate layer is preferably 50 mass% or more, and may be 100 mass%.

The intermediate layer may contain elements such as carbon and sodium as the remainder of the amorphous iron phosphate.

When the amorphous iron phosphate is a hydrate, corrosion resistance is lowered, and thus the amorphous iron phosphate is preferably not a hydrate. Even when a hydrate is formed and remains, the amount of the hydrate is preferably small (usually less than 5.0 mass% of the entire insulating coating 2). The amount of the hydrate can be roughly determined by measuring the amount of water by a thermobalance method.

The intermediate layer 21 may be formed at a timing different from that of a tension coating formed thereon, or may be formed at the same timing, but both the intermediate layer 21 and the tension coating layer 22 exhibit an effect as the insulating coating 2.

The average thickness of the intermediate layer 21 is 0.10 to 3.0 $\mu$m.

When the average thickness of the intermediate layer 21 is less than 0.10 $\mu$m, the effect of improving adhesion between the base steel sheet and the insulating coating via the intermediate layer is not sufficient. On the other hand, when the average thickness of the intermediate layer is more than 3.0 $\mu$m, deterioration of magnetic characteristics is significant.

A grain-oriented electrical steel sheet in which an intermediate layer has been formed and a tension coating layer has not been formed has a base steel sheet and an amorphous iron phosphate layer as an insulating coating on a surface of the base steel sheet, and the amorphous iron phosphate layer has an average thickness of 0.10 to 3.0 $\mu$m.

(Tension coating layer)

The grain-oriented electrical steel sheet 100 according to the present embodiment has the tension coating layer 22 on a surface side of the insulating coating 2 by forming a tension coating on a surface of the intermediate layer 21.

The tension coating layer 22 is not particularly limited as long as it is used as an insulating coating of a grain-oriented electrical steel sheet, but contains a metal phosphate and silica (derived from colloidal silica of a coating liquid) such that the amount of silica is 20 mass% or more from a viewpoint of adhesion to the intermediate layer 21 (adhesion to the base steel sheet 1 via the intermediate layer 21).

On the other hand, when the amount of silica in the tension coating layer is more than 60 mass%, powderization occurs. Therefore, the amount of silica is set to 60 mass% or less.

The tension coating layer 22 preferably contains a metal phosphate in an amount of 10 mass% or more, and more preferably contains a metal phosphate and silica in a total amount of 70 mass% or more. As the remainder other than the metal phosphate and silica, ceramic fine particles such as alumina or silicon nitride may be contained.

The thickness of the tension coating layer 22 is not limited, but the average thickness as the insulating coating 2 (the intermediate layer 21+ the tension coating layer 22) is preferably set to 2.0 to 10.0 $\mu$m when the average thickness of the intermediate layer 21 is in the above range. When the average thickness of the insulating coating 2 is less than 2.0 $\mu$m, there is a concern that a sufficient coating tension cannot be obtained. In addition, elution of phosphoric acid increases. In this case, this may cause stickiness and corrosion resistance deterioration, and may cause coating peeling. On the other hand, when the thickness of the insulating coating 2 is more than 10.0 $\mu$m, magnetic characteristics deteriorate due to decrease of a space factor, or adhesion decreases or corrosion resistance decreases due to cracking or the like.

Examples of the metal phosphate contained in the tension coating layer include one or a mixture of two or more selected from aluminum phosphate, manganese phosphate, zinc phosphate, magnesium phosphate, nickel phosphate, copper phosphate, lithium phosphate, and cobalt phosphate.

The thickness of the intermediate layer 21, the thickness of the tension coating layer 22, and the thickness of the insulating coating 2 are determined by the following method.

A cross section of a sample is observed with a scanning electron microscope at an observation magnification of 5000 times, and the thicknesses at five or more points are measured, whereby an average thickness can be measured. In the measurement, the base steel sheet 1 and the insulating coating 2 are distinguished from each other according to a reflection manner of an electron beam of the scanning electron microscope. In addition, in the insulating coating 2, the intermediate layer 21 and the tension coating layer 22 are distinguished from each other on the basis of presence or absence of detection of silicon derived from silica (The tension coating layer contains silica as described above, but the intermediate layer does not substantially contain silica.).

In addition, the average thickness of the insulating coating 2 can be obtained by summing up the average thickness of the intermediate layer 21 and the average thickness of the tension coating layer 22.

The amount of an amorphous iron phosphate in the intermediate layer 21 can be determined by X-ray diffraction and X-ray analysis.

Specifically, the intermediate layer is subjected to X-ray diffraction to calculate a degree of crystallinity, and confirmed to be amorphous. Thereafter, the coating is peeled off with an alkali, and the peeled coating is subjected to fluorescent X-ray analysis to measure the amount of iron. In the intermediate layer, since iron and phosphoric acid are considered to form iron phosphate, the amount of iron phosphate is calculated from the amount of iron.

In the present embodiment, amorphous means that a crystallinity is less than 5%.

In order to calculate the crystallinity of iron phosphate, measurement is performed with an X-ray diffractometer, and the crystallinity is calculated by dividing the total signal area of the crystalline iron phosphate in the measurement region by a signal area obtained by subtracting a background unique to the device from a total integrated scattering signal intensity. Specifically, measurement is performed, for example, using an X-ray analyzer "SmartLab" manufactured by RIGAKU CORPORATION or a corresponding X-ray diffraction measuring device under conditions of a Cu bulb, a voltage of 40 kV, a current of 30 mA, a measurement angle $2\theta$ of 5 to 90°, a measurement interval of 0.02° step, a scan speed of 4°/min., an incident slit of 1/2deg., and light receiving slits 1 and 2 of 20 mm. An amorphous component appears as an amorphous halo in the vicinity of $2\theta$ = 20°, and iron phosphate appears as a main peak in the vicinity of 15 to 30°.

The background is separated from the obtained peak to determine a scattering intensity, and a crystallinity X is calculated using the following formula with a crystalline scattering intensity as C and an amorphous scattering intensity as A.

$$X = C/(C + A)$$

In the tension coating layer 22, the proportion in mass of the metal phosphate, the type of the metal phosphate, and the amount of silica can be determined by the following method.

Similarly to the method for measuring the thicknesses of the intermediate layer 21 and the tension coating layer 22, it is possible to specify the amount of the metal phosphate and the type of the metal phosphate by using a scanning electron microscope and an energy dispersive element analyzer.

The silica content in the tension coating layer 22 can be measured by using a scanning electron microscope and an energy dispersive elemental analyzer.

<Manufacturing method>

According to a manufacturing method satisfying manufacturing conditions described below, the grain-oriented electrical steel sheet according to the present embodiment can be suitably manufactured. Note that, as a matter of course, the grain-oriented electrical steel sheet according to the present embodiment is not limited by the manufacturing method. That is, a grain-oriented electrical steel sheet having the above-described composition is regarded as the grain-oriented electrical steel sheet according to the present embodiment regardless of manufacturing conditions therefor.

The grain-oriented electrical steel sheet according to the present embodiment can be manufactured by a manufacturing method including:

(I) a hot rolling step of hot rolling a steel piece having a predetermined chemical composition to obtain a hot rolled sheet;

(II) a hot-band annealing step of annealing the hot rolled sheet;

(III) a cold rolling step of cold-rolling the hot rolled sheet after the hot-band annealing step to obtain a cold rolled sheet;

(IV) a decarburization annealing step of performing decarburization annealing on the cold rolled sheet;

(V) a final annealing step of applying an annealing separator containing 10 to 100 mass% of $Al_2O_3$ to the cold rolled sheet (steel sheet) after the decarburization annealing step, drying the annealing separator, and then performing final annealing;

(VI) an annealing separator removing step of removing an excess of the annealing separator from a surface of the steel sheet after the final annealing step by water washing;

(VII) a light pickling step of pickling the steel sheet after the annealing separator removing step with a mixed acid of two or more types obtained by mixing one or more selected from sulfuric acid, phosphoric acid, and nitric acid, having a liquid temperature of 25 to 85°C, and having a concentration of 0.5 to 10 mass% for 5 to 30 seconds;

(VIII) an immersion step of immersing the steel sheet after the light pickling step in a treatment liquid having a liquid temperature of 20 to 70°C and having a phosphoric acid concentration of 2.0 to 15.0 mass% for 5 to 50 seconds;

(IX) a drying step of pulling up the steel sheet after the immersion step from the treatment liquid, removing an excess of the treatment liquid by water washing, and then drying the steel sheet; and

(X) a tension coating layer forming step of applying, to the steel sheet after the drying step, a coating liquid containing a metal phosphate and colloidal silica such that the colloidal silica is contained in an amount of 50 to 150 parts by mass with respect to 100 parts by mass of the metal phosphate, drying the coating liquid, and then holding the steel sheet at a sheet temperature of 700 to 950°C for 10 to 50 seconds.

In addition, the method for manufacturing the grain-oriented electrical steel sheet according to the present embodiment may further include one or both of

(XI) a nitriding treatment step of subjecting the cold rolled sheet to a nitriding treatment between the decarburization annealing step and the final annealing step, and

(XII) a magnetic domain refinement step of performing magnetic domain control of the steel sheet after the tension coating layer forming step. The method for manufacturing the grain-oriented electrical steel sheet according to the present embodiment may further include, between the light pickling step and the immersion step,

(XIII) a surface adjusting step of controlling reactivity of a sheet surface.

Among these steps, (V) final annealing step to (X) tension coating layer forming step mainly related to formation of the insulating coating are characteristic in the manufacture of the grain-oriented electrical steel sheet according to the present embodiment, and known conditions can be adopted for other steps or conditions not described.

Hereinafter, these steps will be described.

<Hot rolling step>

In the hot rolling step, a steel piece having a predetermined chemical composition, such as a slab is heated and then hot-rolled to obtain a hot rolled sheet. The heating temperature of the steel piece is preferably set to be in a range of 1100 to 1450°C. The heating temperature is more preferably 1300 to 1400°C.

The chemical composition of the steel piece only needs to be controlled according to the chemical composition of a grain-oriented electrical steel sheet to be finally obtained, but examples thereof include a chemical composition containing, in mass%, C: 0.01 to 0.20%, Si: 2.50 to 4.00%, sol. Al: 0.01 to 0.040%, Mn: 0.01 to 0.50%, N: 0.020% or less, S: 0.005 to 0.040%, Cu: 0 to 0.50%, Sn: 0 to 0.50%, Se: 0 to 0.020%, and Sb: 0 to 0.50%, with the remainder of Fe and impurities.

Hot rolling conditions are not particularly limited, and may be appropriately set on the basis of required characteristics. The sheet thickness of the hot rolled sheet is preferably, for example, in a range of 2.0 mm or more and 3.0 mm or less.

<Hot-band annealing step>

In the hot-band annealing step, the hot rolled sheet manufactured through the hot rolling step is annealed. By performing such an annealing treatment, recrystallization occurs in a metallographic structure, and favorable magnetic characteristics can be achieved, which is preferable

When the hot-band annealing is performed, the hot rolled sheet manufactured through the hot rolling step only needs to be annealed according to a known method. A means for heating the hot rolled sheet at the time of annealing is not particularly limited, and a known heating method can be adopted. Annealing conditions are not particularly limited. For example, the hot rolled sheet can be annealed in a temperature range of 900 to 1200°C for ten seconds to five minutes.

<Cold rolling step>

In the cold rolling step, the hot rolled sheet after the hot-band annealing step is subjected to cold rolling to obtain a cold rolled sheet. The cold rolling may be one time of cold rolling (a series of cold rolling without intermediate annealing). On the other hand, before a final pass of the cold rolling step, cold rolling may be interrupted, at least one or more times of intermediate annealing may be performed, and a plurality of times of cold rolling may be performed with intermediate annealing interposed therebetween.

When the intermediate annealing is performed, it is preferable to hold the hot rolled sheet at a temperature of 1000 to 1200°C for 5 to 180 seconds. The annealing atmosphere is not particularly limited. The number of times of intermediate annealing is preferably three or less in consideration of manufacturing cost.

In addition, before the cold rolling step, a surface of the hot rolled sheet may be subjected to pickling.

In the cold rolling step according to the present embodiment, the hot rolled sheet after the hot-band annealing step only needs to be cold-rolled according to a known method to form a cold rolled sheet. For example, a final rolling reduction can be set to be in a range of 80 to 95%. When the final rolling reduction is 80% or more, a Goss nucleus in which the {110}<001> orientation has a high development degree in a rolling direction can be obtained, which is preferable. On the other hand, when the final rolling reduction exceeds 95%, there is a high possibility that secondary recrystallization is unstable in the subsequent final annealing step, which is not preferable.

The final rolling reduction is a cumulative rolling reduction of cold rolling, and when intermediate annealing is performed, the final rolling reduction is a cumulative rolling reduction of cold rolling after the final intermediate annealing.

<Decarburization annealing step>

In the decarburization annealing step, the obtained cold rolled sheet (steel sheet after the cold rolling step) is subjected to decarburization annealing. In the decarburization annealing, decarburization annealing conditions are not limited as long as the cold rolled sheet can be primarily recrystallized and C that adversely affects magnetic characteristics can be removed from the steel sheet, but for example, the cold rolled sheet is held at an annealing temperature of 800 to 900°C for 10 to 600 seconds with a degree of oxidation ($PH_2O/PH_2$) of 0.3 to 0.6 in an annealing atmosphere (furnace atmosphere).

<Nitriding treatment step>

A nitriding treatment may be performed between the decarburization annealing step and the final annealing step described later.
In the nitriding treatment step, for example, the steel sheet after the decarburization annealing step is maintained at about 700 to 850°C in a nitriding treatment atmosphere (atmosphere containing a gas having nitriding ability, such as hydrogen, nitrogen, or ammonia) to perform the nitriding treatment. When AlN is utilized as an inhibitor, the nitrogen concentration of the steel sheet is preferably set to 40 ppm or more by the nitriding treatment. On the other hand, when the nitrogen concentration of the steel sheet exceeds 1000 ppm, AlN is excessively present in the steel sheet even after completion of secondary recrystallization in the final annealing. Such AlN causes iron loss deterioration. Therefore, the nitrogen concentration of the steel sheet after the nitriding treatment step is preferably set to 1000 ppm or less.

<Final annealing step>

In the final annealing step, an annealing separator containing 10 to 100 mass% of $Al_2O_3$ is applied to the cold rolled sheet that has been subjected to the decarburization annealing step or further subjected to the nitriding treatment, and dried, and then final annealing is performed.
In a conventional method for manufacturing a grain-oriented electrical steel sheet, a forsterite film is formed on a surface of a steel sheet (cold rolled sheet) by applying an annealing separator mainly containing MgO and performing final annealing. On the other hand, in the method for manufacturing the grain-oriented electrical steel sheet according to the present embodiment, an annealing separator containing 10 mass% or more of $Al_2O_3$ is used so as not to form a forsterite film. The amount of $Al_2O_3$ in the annealing separator may be 30 mass% or more or 50 mass% or more. The amount of $Al_2O_3$ may be 100 mass%, but, in the method for manufacturing the grain-oriented electrical steel sheet according to the present embodiment, the annealing separator preferably contains MgO from a viewpoint of preventing $Al_2O_3$ from being sintered on a sheet surface. MgO may be 0%, but the amount of MgO is preferably set to 5% by mass or more when the above effect is to be obtained. When MgO is contained, the amount of MgO is set to 90 mass% or less in order to ensure 10 mass% or more of $Al_2O_3$. The amount of MgO is preferably 50 mass% or less.
In addition, in the method for manufacturing the grain-oriented electrical steel sheet according to the present embodiment, the annealing separator may further contain a chloride. When the annealing separator contains a chloride, an effect that a forsterite film is more hardly formed can be obtained. The amount of the chloride is not particularly limited, and may be 0%, but is preferably 0.5 to 10 mass% when the above effect is to be obtained. As the chloride, for example, bismuth chloride, calcium chloride, cobalt chloride, iron chloride, and nickel chloride are effective.
Final annealing conditions are not limited, but for example, a condition of holding the steel sheet at a temperature of 1150 to 1250°C for 10 to 60 hours can be adopted.

<Annealing separator removing step>

In the annealing separator removing step, an excess of the annealing separator is removed from the steel sheet after the final annealing step by water washing.

<Light pickling step>

In the light pickling step, the steel sheet after the annealing separator removing step is pickled with a mixed acid of two or more types obtained by mixing one or more selected from sulfuric acid, phosphoric acid, and nitric acid, having a liquid temperature of 25 to 85°C, and having a concentration of 0.5 to 10 mass% for 5 to 30 seconds. Note that a preferred range varies depending on the type of acid within the above range. Specifically, in a case of sulfuric acid, the liquid temperature is set to 25 to 85°C, the concentration is set to 0.5 mass% or more and less than 5 mass% when the liquid temperature is 70°C or higher, the concentration is set to 5 mass% or more and less than 10 mass% when the liquid temperature is lower than 70°C, and a pickling time is set to 5 to 25 seconds. In a case of phosphoric acid, the liquid temperature is set to 60 to 85°C, and the concentration is set to 2 to 10 mass%. In a case of nitric acid, the liquid temperature is set to 40°C or lower. In a case where a mixed acid of two or more types obtained by mixing two or more types of acids is used, preferably, the liquid temperature is set to 60 to 85°C and the concentration is set to 2 to 10 mass% when the mixed acid of two or more types does not contain nitric acid, and the liquid temperature is set to 40°C or lower when nitric acid is mixed.

As a result, unnecessary substances on a sheet surface are removed, and the surface becomes active.

<Surface adjusting step>

A surface adjusting step of controlling reactivity of a sheet surface may be performed between the light pickling step and the immersion step.

Although conditions of the surface adjusting step are not limited, a condition of immersing the steel sheet after the annealing separator removing step in a commercially available surface conditioner for 30 seconds to one minute is an exemplary example.

<Immersion step>

<Drying step>

In the immersion step, the steel sheet after the light pickling step (or after the surface adjusting step is further performed as necessary) is immersed in a treatment liquid (phosphoric acid solution (aqueous solution)) having a liquid temperature of 20 to 70°C and a phosphoric acid concentration of 2.0 to 15.0 mass% for 5 to 50 seconds.

Thereafter, in the drying step, an excess of the treatment liquid is removed by water washing from the steel sheet that has been pulled up from the treatment liquid, and then the steel sheet is dried (drying step). As a result, an intermediate layer containing an amorphous iron phosphate is formed on a surface of the steel sheet (base steel sheet).

When the liquid temperature is less than 20°C or the immersion time is less than five seconds, an intermediate layer having a sufficient thickness cannot be obtained. On the other hand, when the liquid temperature is higher than 70°C or the immersion time is longer than 50 seconds, the thickness of the intermediate layer is excessive.

In addition, when the concentration of phosphoric acid in the treatment liquid is less than 2.0 mass%, the amount of iron phosphate generated is too small, resulting in poor adhesion. On the other hand, when the concentration of phosphoric acid is more than 15.0 mass%, unevenness occurs in generation of iron phosphate, resulting in poor adhesion and poor magnetic properties.

In addition, the treatment liquid (phosphoric acid solution) may be a mixed solution of phosphoric acid and nitric acid as long as the concentration of phosphoric acid is within the above range from a viewpoint of improving adhesion. In addition, a surfactant may be added to the phosphoric acid solution.

<Tension coating layer forming step>

In the tension coating layer forming step, a coating liquid containing a metal phosphate and colloidal silica is applied to the steel sheet after the drying step (the steel sheet in which the intermediate layer is formed on the base steel sheet), and dried, and then the steel sheet is held at a sheet temperature of 700 to 950°C for 10 to 50 seconds to form a tension coating layer. The layer formed of the tension coating (tension coating layer) and the intermediate layer serve as an insulating coating.

When the sheet temperature is lower than 700°C, a stress difference from the steel sheet is small, the tension is low, and magnetic characteristics are poor. Therefore, the sheet temperature is preferably set to 700°C or higher. On the other hand, when the sheet temperature is higher than 950°C, rigidity of the steel sheet decreases and the steel sheet is easily deformed. In this case, the steel sheet may be distorted due to transfer or the like, resulting in poor magnetic characteristics. Therefore, the sheet temperature is preferably set to 950°C or lower.

When the holding time is less than 10 seconds, elution resistance is poor. Therefore, the holding time is preferably set to 10 seconds or more. On the other hand, when the holding time is more than 120 seconds, productivity is poor. Therefore, the holding time is preferably 120 seconds or less.

The coating liquid contains a metal phosphate and colloidal silica such that the colloidal silica is contained in an amount of 50 to 150 parts by mass with respect to 100 parts by mass of the metal phosphate. As the metal phosphate, for example, one or a mixture of two or more selected from aluminum phosphate, zinc phosphate, magnesium phosphate, nickel phosphate, copper phosphate, lithium phosphate, and cobalt phosphate can be used. The coating liquid may contain vanadium, tungsten, molybdenum, zirconium, and the like as additional elements.

As the colloidal silica, S-type or C-type colloidal silica can be used. The S-type colloidal silica means colloidal silica in which a silica solution is alkaline, and the C-type colloidal silica means colloidal silica in which a silica particle surface is subjected to an aluminum treatment, and a silica solution is alkaline to neutral. The S-type colloidal silica is widely and generally used, and is relatively inexpensive in price, but it is necessary to be careful because the S-type colloidal silica may aggregate and precipitate when being mixed with an acidic metal phosphate solution. The C-type colloidal silica is stable even when being mixed with a metal phosphate solution, and there is no possibility of precipitation, but the C-type colloidal silica is relatively expensive because the number of treatment steps is large. It is preferable to select and use the S-type colloidal silica or the C-type colloidal silica according to stability of a coating liquid to be prepared.

<Magnetic domain refinement step>

The method for manufacturing the grain-oriented electrical steel sheet according to the present embodiment may further include a magnetic domain refinement step of performing magnetic domain refinement on the steel sheet.

By performing the magnetic domain refinement treatment, iron loss of the grain-oriented electrical steel sheet can be further reduced.

As a method of the magnetic domain refinement treatment, there are a method for narrowing the width of a 180° magnetic domain (performing refinement of a 180° magnetic domain) by forming linear or dotted groove parts extending in a direction intersecting a rolling direction at predetermined intervals in the rolling direction, and a method for narrowing the width of a 180° magnetic domain (performing refinement of a 180° magnetic domain) by forming linear or dotted stress-strain fields or groove parts extending in a direction intersecting a rolling direction at predetermined intervals in the rolling direction in a case where the magnetic domain refinement treatment is performed after the insulating coating layer forming step.

In a case where a stress-strain field is formed, laser beam irradiation, electron beam irradiation, and the like can be applied. In a case where a groove part is formed, a mechanical groove forming method using a gear or the like, a chemical groove forming method for forming a groove by electrolytic etching, a thermal groove forming method by laser irradiation, and the like can be applied.

In a case where the insulating coating is damaged due to formation of a stress-strain field or a groove part and characteristics such as insulation properties are deteriorated, the insulating coating may be formed again to repair the damage. Examples

A slab containing, by mass%, C: 0.08%, Si: 3.31%, sol. Al: 0.028%, N: 0.008%, Mn: 0.15%, and S: 0.007%, with the remainder of Fe and impurities, was cast.

This slab was heated to 1350°C and then hot-rolled to form a hot rolled sheet having a sheet thickness of 2.2 mm.

This hot rolled sheet was annealed (hot-band annealing) at 1100°C for 10 seconds, and then cold-rolled until the sheet thickness became 0.22 mm to obtain a cold rolled sheet.

This cold rolled sheet was subjected to decarburization annealing at 830°C for 90 seconds in an atmosphere with $(PH_2O/PH_2)$ of 0.4.

Thereafter, except for Intermediate No. 2, an annealing separator containing 50 mass% of $Al_2O_3$, 45 mass% of MgO, and 5 mass% of bismuth chloride was applied to the cold rolled sheet, and dried, and then final annealing was performed at 1200°C for 20 hours. For Intermediate No. 2, an annealing separator containing only $Al_2O_3$ (100 mass%) was applied to the cold rolled sheet, and dried, and then final annealing was performed at 1200°C for 20 hours.

When each of the steel sheets (Intermediate Nos. 1 to 20) after the final annealing step was washed with water to remove an excess of the annealing separator, no forsterite film was formed on a sheet surface.

Each of these steel sheets (Intermediate Nos. 1 to 20) was subjected to light pickling under conditions presented in Table 1 except for Intermediate No. 18. In addition, each of the steel sheets after the light pickling was immersed in a surface conditioner (Ti colloid-based) for 10 seconds to perform surface adjustment.

Each of these steel sheets (Intermediate Nos. 1 to 20) was immersed in the treatment liquid presented in Table 1 except for Intermediate Nos. 19 and 20, and then heated and dried to form an intermediate layer. The average thickness of the intermediate layer (value obtained by measuring and averaging thicknesses at 10 points) was as presented in Table 1. This intermediate layer was measured as described above, and the amount of iron phosphate was as presented in Table 1. In addition, a sample in which the amount of iron phosphate was 30 mass% or more had a crystallinity of less than 5% and was amorphous. Iron phosphate was not a hydrate in each of the samples.

[Table 1]

| Intermediate No. | Light pickling step | | | | Immersion step | | | | Intermediate layer | |
| | Type of acid | Liquid temperature (°C) | Concentration (mass%) | Pickling time (second) | Treatment liquid | | Immersion conditions | | Thickness (average μm) | Amount of iron phosphate (mass%) |
| | | | | | Type | Concentration of phosphoric acid (mass%) | Temperature (°C) | Time (second) | | |
|---|---|---|---|---|---|---|---|---|---|---|
| 1 | Sulfuric acid | 80 | 5 | 20 | Phosphoric acid solution | 10.0 | 25 | 30 | 0.9 | 40 |
| 2 | Hydrochloric acid | 50 | 8 | 10 | Phosphoric acid solution | 10.0 | 35 | 20 | 1.4 | 60 |
| 3 | Sulfuric acid | 80 | 8 | 10 | Phosphoric acid + nitric acid mixed solution | 14.0 | 20 | 30 | 22 | 80 |
| 4 | Phosphoric acid | 85 | 10 | 10 | Phosphoric acid + surfactant solution | 5.0 | 60 | 15 | 2.8 | 95 |
| 5 | Sulfuric acid | 70 | 5 | 25 | Phosphoric acid + surfactant solution | 3.0 | 70 | 12 | 2.6 | 80 |
| 6 | Sulfuric acid + Phosphoric acid=1:1 | 65 | 3 | 20 | Phosphoric acid + surfactant solution | 10.0 | 40 | 45 | 1.9 | 50 |
| 7 | Sulfuric acid | 80 | 4 | 20 | Phosphoric acid solution | 100 | 25 | 30 | 0.7 | 50 |
| 8 | Sulfuric acid | 65 | 8 | 25 | Phosphoric acid + nitric acid mixed solution | 14.0 | 20 | 30 | 1.8 | 70 |

| Intermediate No. | Light pickling step | | | | Immersion step | | | | Intermediate layer | |
| | | | | | Treatment liquid | | Immersion conditions | | | |
| | Type of acid | Liquid temperature (°C) | Concentration (mass%) | Pickling time (second) | Type | Concentration of phosphoric acid (mass%) | Temperature (°C) | Time (second) | Thickness (average μm) | Amount of iron phosphate (mass%) |
|---|---|---|---|---|---|---|---|---|---|---|
| 9 | Sulfuric acid | 70 | 4 | 25 | Phosphoric acid + surfactant solution | 3.0 | 70 | 12 | 2.4 | 80 |
| 10 | Sulfuric acid + Phosphoric acid=1:1 | 65 | 3 | 20 | Phosphoric acid + surfactant solution | 10.0 | 40 | 45 | 1.9 | 50 |
| 11 | Nitric acid | 25 | 0.6 | 20 | Phosphoric acid solution | 8.0 | 30 | 40 | 1.5 | 60 |
| 12 | Hydrochloric acid | 50 | 10 | 20 | Phosphoric acid + surfactant solution | 1.5 | 20 | 30 | 0.08 | 20 |
| 13 | Hydrochloric acid | 50 | 3 | 25 | Phosphoric acid + surfactant solution | 2.0 | 15 | 50 | 0.03 | 10 |
| 14 | Sulfuric acid | 75 | 5 | 60 | Phosphoric acid + surfactant solution | 12.0 | 20 | 4 | 0.05 | 20 |
| 15 | Sulfuric acid | 75 | 5 | 40 | Phosphoric acid + surfactant solution | 3.0 | 20 | 60 | 0.06 | 20 |

| Intermediate No. | Light pickling step | | | | Immersion step | | | | Intermediate layer | |
|---|---|---|---|---|---|---|---|---|---|---|
| | | | | | Treatment liquid | | Immersion conditions | | | |
| | Type of acid | Liquid temperature (°C) | Concentration (mass%) | Pickling time (second) | Type | Concentration of phosphoric acid (mass%) | Temperature (°C) | Time (second) | Thickness (average μm) | Amount of iron phosphate (mass%) |
| 16 | Sulfuric acid | 75 | 40 | 10 | Phosphoric acid + surfactant solution | 20.0 | 50 | 30 | 3.3 | 90 |
| 17 | Phosphoric acid | 85 | 15 | 15 | Phosphoric acid + surfactant solution | 12.0 | 75 | 30 | 3.2 | 90 |
| 18 | Not treated | - | - | - | Phosphoric acid + surfactant solution | 12.0 | 60 | 120 | 3.9 | 95 |
| 19 | Sulfuric acid | 75 | 8 | 15 | Not treated | - | - | - | 0.0 | 0 |
| 20 | Sulfuric acid | 75 | 4 | 20 | Not treated | - | - | - | 0.0 | 0 |

Each of the steel sheets on which the intermediate layers were formed (Intermediate Nos. 1 to 18) and the steel sheets on which the intermediate layers were not formed (Intermediate Nos. 19 and 20) was cut into a plurality of pieces as necessary, a coating liquid containing a metal phosphate and colloidal silica presented in Table 2 was applied to each of the steel sheets, and each of the steel sheets was baked in a drying furnace for a time presented in Table 2 so as to have a sheet temperature presented in Table 2, thereby forming a tension coating on a surface. In a case where vanadium, tungsten, molybdenum, or zirconium was contained in the coating liquid, vanadium, tungsten, molybdenum, or zirconium was added as an oxygen acid ($V_2O_4$, $WO_3$, $MoO_3$, or $ZrO_2$) in a molar ratio presented in Table 2. In the formation, the thickness of the tension coating layer was changed by changing an application amount of the coating liquid. Some of the coating liquids contained alumina or silicon nitride as a remainder.

In this way, steel sheets (grain-oriented electrical steel sheets) Nos. A to AC were manufactured.

For these steel sheets, the silica content and the metal phosphate amount of the tension coating, and the average thickness (value obtained by measuring and averaging thicknesses at 10 points) of the insulating coating were determined by the methods described above.

Results thereof are presented in Table 2.

In addition, as a result of measuring the chemical composition of the base steel sheet, the base steel sheet contained Si: 3.30%, C: 0.001%, sol. Al: less than 0.001%, N: 0.001%, Mn: 0.07%, and S: less than 0.0005%, with the remainder of Fe and impurities.

[Table 2]

| No. | Intermediate No. | Tension coating layer forming step | | | | | | | Tension coating layer | | Average thickness of insulating coating | Note |
|---|---|---|---|---|---|---|---|---|---|---|---|---|
| | | Coating liquid | | | | | Forming conditions | | | | | |
| | | Metal phosphate | | Molar ratio of additional metal element | Colloidal silica | | Sheet temperature | Time | Silica content | Total amount of metal phosphate and silica | | |
| | | Type | Parts by mass | | Type | Parts by mass | (°C) | (second) | (mass%) | (mass%) | (µm) | |
| A | 1 | Aluminum phosphate | | - | S-Type | 100 | 875 | 45 | 43 | 70 | 3.6 | Inventive Example |
| B | 2 | Zinc phosphate | | - | S-Type | 120 | 850 | 50 | 47 | 76 | 3.4 | Inventive Example |
| C | 3 | Manganese phosphate | | - | C-Type | 100 | 850 | 30 | 33 | 60 | 3.7 | Inventive Example |
| D | 4 | Molybdenum phosphate | | - | S-Type | 100 | 875 | 45 | 43 | 70 | 3.2 | Inventive Example |
| E | 5 | Aluminum phosphate/-Magnesium phosphate | | 0.67 | S-Type | 120 | 850 | 50 | 47 | 76 | 3.5 | Inventive Example |
| F | 1 | Aluminum phosphate/-Zinc phosphate | | 0.67 | C-Type | 135 | 850 | 30 | 40 | 67 | 4.2 | Inventive Example |
| G | 2 | Aluminum phosphate/-Lithium phosphate | | 0.18 | C-Type | 70 | 850 | 30 | 26 | 54 | 4.1 | Inventive Example |
| H | 3 | Aluminum phosphate/-Copper phosphate | 100 | 0.14 | C-Type | 68 | 850 | 30 | 25 | 54 | 4.3 | Inventive Example |
| I | 4 | Aluminum phosphate/-Barium phosphate | | 0.17 | C-Type | 80 | 850 | 30 | 29 | 56 | 3.9 | Inventive Example |
| J | 5 | Aluminum phosphate/-Tungsten phosphate | | 0.17 | C-Type | 100 | 850 | 30 | 33 | 60 | 3.2 | Inventive Example |
| K | 6 | Aluminum phosphate/Zirconium phosphate | | 0.18 | S-Type | 100 | 875 | 45 | 43 | 70 | 4.4 | Inventive Example |

| No. | Intermediate No. | Tension coating layer forming step | | | | | | | Tension coating layer | | Average thickness of insulating coating | Note |
|---|---|---|---|---|---|---|---|---|---|---|---|---|
| | | Coating liquid | | | | | Forming conditions | | | | | |
| | | Metal phosphate | | Molar ratio of additional metal element | Colloidal silica | | Sheet temperature | Time | Silica content | Total amount of metal phosphate and silica | | |
| | | Type | Parts by mass | | Type | Parts by mass | (°C) | (second) | (mass%) | (mass%) | (μm) | |
| L | 1 | Aluminum phosphate/-Molybdenum phosphate | | 0.17 | S-Type | 100 | 875 | 45 | 43 | 70 | 4.1 | Inventive Example |
| M | 2 | Aluminum phosphate/Vanadium phosphate | | 0.18 | S-Type | 100 | 875 | 45 | 43 | 70 | 3.7 | Inventive Example |
| N | 7 | Aluminum phosphate/-Lithium phosphate | | 0.15 | S-Type | 100 | 875 | 45 | 43 | 70 | 4.5 | Inventive Example |
| O | 8 | Aluminum phosphate/-Tungstic acid | | 0.2 | S-Type | 100 | 875 | 45 | 43 | 70 | 5.5 | Inventive Example |
| P | 9 | Aluminum phosphate/Zirconic acid | | 0.2 | S-Type | 100 | 875 | 45 | 43 | 70 | 4.1 | Inventive Example |
| Q | 10 | Aluminum phosphate/Vanadic acid | | 0.2 | S-Type | 100 | 875 | 45 | 43 | 70 | 3.8 | Inventive Example |
| R | 11 | Aluminum phosphate/-Molybdic acid | | 0.2 | S-Type | 100 | 875 | 45 | 43 | 70 | 3.7 | Inventive Example |
| S | 12 | Aluminum phosphate/-Magnesium phosphate | | 0.67 | S-Type | 100 | 875 | 45 | 43 | 70 | 3.1 | Comparative Example |
| T | 13 | Aluminum phosphate/-Magnesium phosphate | | 0.67 | S-Type | 105 | 850 | 30 | 44 | 72 | 1.9 | Comparative Example |
| U | 14 | Aluminum phosphate/-Magnesium phosphate | | 0.67 | S-Type | 105 | 850 | 30 | 44 | 72 | 2.6 | Comparative Example |
| V | 15 | Aluminum phosphate/-Magnesium phosphate | | 0.67 | S-Type | 100 | 875 | 45 | 43 | 70 | 2.9 | Comparative Example |

EP 4 506 486 A1

19

(continued)

| No. | Intermediate No. | Metal phosphate | | Molar ratio of additional metal element | Colloidal silica | | Sheet temperature | Time | Silica content | Total amount of metal phosphate and silica | Average thickness of insulating coating | Note |
|---|---|---|---|---|---|---|---|---|---|---|---|---|
| | | Type | Parts by mass | | Type | Parts by mass | (°C) | (second) | (mass%) | (mass%) | (μm) | |
| W | 16 | Aluminum phosphate | | 0.67 | S-Type | 100 | 875 | 45 | 43 | 70 | 6.2 | Comparative Example |
| X | 17 | Aluminum phosphate | | 0.67 | S-Type | 100 | 875 | 45 | 43 | 70 | 6.4 | Comparative Example |
| Y | 18 | Aluminum phosphate | | 0.67 | S-Type | 100 | 875 | 45 | 43 | 70 | 5.4 | Comparative Example |
| Z | 19 | Aluminum phosphate | | 0.67 | S-Type | 100 | 875 | 45 | 43 | 70 | 1.2 | Comparative Example |
| AA | 20 | Aluminum phosphate | | 0.67 | S-Type | 100 | 875 | 45 | 43 | 70 | 1.1 | Comparative Example |
| AB | 3 | Aluminum phosphate/-Lithium phosphate | | 0.18 | C-Type | 32 | 850 | 30 | 14 | 46 | 4.0 | Comparative Example |
| AC | 4 | Aluminum phosphate/-Lithium phosphate | | 0.18 | S-Type | 225 | 850 | 30 | 63 | 85 | 4.2 | Comparative Example |

For each of these steel sheets, adhesion, coating tension, corrosion resistance, elution resistance, and magnetic characteristics of an insulating coating were determined by methods described later. Results thereof are presented in Table 3.

[Adhesion]

Adhesion of a coating was evaluated by the degree of peeling (area fraction) of the coating after a bending adhesion test was performed in which a sample having a width of 30 mm and a length of 300 mm was collected from a steel sheet, the sample was subjected to strain relief annealing at 800°C for two hours in a nitrogen stream, and then wound around a 10 mmφ cylinder and unwound.

Evaluation criteria were as follows, and when a sample was evaluated as ⊙ or ∘, the sample was determined to have excellent film coating adhesion.

⊙: Peeling area fraction: 0 to 0.5%
∘: Peeling area fraction: more than 0.5% and 5.0% or less
△: Peeling area fraction: more than 5.0% and 20% or less
×: Peeling area fraction: more than 20% and 50% or less
××: Peeling area fraction: more than 50%

[Coating tension]

Coating tension was calculated by collecting a sample from a steel sheet and counting backward from a bending state when an insulating coating on one surface of the sample was peeled off.

When the obtained coating tension was 4.0 MPa or more, it was determined that the coating tension was excellent.

[Corrosion resistance]

In accordance with a salt spray test of JIS Z2371:2015, a 5%NaCl aqueous solution was naturally dropped to a sample for seven hours in an atmosphere of 35°C.

Thereafter, a rusting area was evaluated at 10 points.

Evaluation criteria were as follows, and a score of 5 or more (5 to 10) was determined to be excellent in corrosion resistance.

10: No rust was generated.
9: Rust was generated in an extremely small amount (area fraction was 0.10% or less)
8: A rust generation area fraction was more than 0.10% and 0.25% or less
7: A rust generation area fraction was more than 0.25% and 0.50% or less
6: A rust generation area fraction was more than 0.50% and 1.0% or less
5: A rust generation area fraction was more than 1.0% and 2.5% or less
4: A rust generation area fraction was more than 2.5% and 5.0% or less
3: A rust generation area fraction was more than 5% and 10% or less
2: A rust generation area fraction was more than 10% and 25% or less
1: A rust generation area fraction was more than 25% and 50% or less

[Elution resistance]

A sample was collected from the obtained steel sheet, the sample was boiled in boiled pure water for 10 minutes, and the amount of phosphoric acid eluted in the pure water was measured. By dividing the amount of the eluted phosphoric acid by the area of the insulating coating of the boiled grain-oriented electrical steel sheet, an elution amount ($mg/m^2$) per unit area was determined, and elution resistance was evaluated.

The amount of phosphoric acid eluted in the pure water was calculated by cooling the pure water (solution) in which phosphoric acid was eluted, diluting the cooled solution with pure water, and measuring a phosphoric acid concentration of the sample by ICP-AES.

When the elution amount per unit area was less than 40 $mg/m^2$, it was determined that elution resistance was excellent.

[Magnetic characteristics]

Iron loss was evaluated as magnetic characteristics. Specifically, the obtained steel sheet was irradiated with a laser beam under a condition of UA (irradiation energy density) of 2.0 mJ/mm$^2$ to perform magnetic domain refinement treatment, and B8 (magnetic flux density at a magnetization force of 800 A/m) (not presented in Table) and W17/50 (iron loss per mass at magnetic flux density of 1.7 T and amplitude of 50 Hz) were measured.

When the iron loss was 0.70 W/kg or less, it was determined that magnetic characteristics were excellent. These characteristic values were measured by single sheet tester (SST) in accordance with JIS C2556:2015.

[Table 3]

| No. | Evaluation | | | | | Note |
|---|---|---|---|---|---|---|
| | Adhesion | Coating tension | Corrosion resistance | Elution resistance | Iron loss (W17/50) | |
| | | MPa | | mg/m$^2$ | W/kg | |
| A | ○ | 7.9 | 8 | 31 | 0.65 | Inventive Example |
| B | ○ | 8.2 | 8 | 27 | 0.69 | Inventive Example |
| C | ○ | 7.7 | 7 | 24 | 0.68 | Inventive Example |
| D | ○ | 9.1 | 7 | 20 | 0.64 | Inventive Example |
| E | ○ | 8.6 | 9 | 19 | 0.65 | Inventive Example |
| F | ○ | 7.2 | 7 | 23 | 0.66 | Inventive Example |
| G | ○ | 8.9 | 8 | 20 | 0.69 | Inventive Example |
| H | ○ | 9.6 | 8 | 16 | 0.69 | Inventive Example |
| I | ○ | 8.6 | 7 | 21 | 0.66 | Inventive Example |
| J | ⊙ | 6.4 | 7 | 31 | 0.68 | Inventive Example |
| K | ○ | 7.4 | 6 | 16 | 0.69 | Inventive Example |
| L | ○ | 8.4 | 7 | 18 | 0.66 | Inventive Example |
| M | ○ | 8.3 | 6 | 19 | 0.67 | Inventive Example |
| N | ○ | 7.8 | 6 | 21 | 0.67 | Inventive Example |
| O | ⊙ | 8.8 | 5 | 26 | 0.68 | Inventive Example |
| P | ○ | 8.3 | 7 | 24 | 0.64 | Inventive Example |
| Q | ○ | 8.1 | 6 | 23 | 0.65 | Inventive Example |
| R | ○ | 8.2 | 5 | 20 | 0.66 | Inventive Example |
| S | × | 3.5 | 5 | 42 | 0.84 | Comparative Example |
| T | ×× | 2.3 | 3 | 56 | 0.88 | Comparative Example |
| U | △ | 4.1 | 4 | 54 | 0.71 | Comparative Example |
| V | △ | 3.2 | 7 | 42 | 0.84 | Comparative Example |
| W | △ | 5.4 | 6 | 14 | 0.79 | Comparative Example |
| X | × | 6.3 | 5 | 13 | 0.81 | Comparative Example |
| Y | × | 4.1 | 7 | 21 | 0.82 | Comparative Example |
| Z | ×× | 2.1 | 3 | 55 | 0.89 | Comparative Example |
| AA | ×× | 1.6 | 3 | 50 | 0.88 | Comparative Example |
| AB | △ | 3.6 | 3 | 57 | 0.76 | Comparative Example |
| AC | × | 6.1 | 8 | 48 | 0.71 | Comparative Example |

As presented in Tables 1 to 3, each of the steel sheets (grain-oriented electrical steel sheets) of Nos. A to R in

which a predetermined intermediate layer and a predetermined tension coating layer were formed on a surface of the base steel sheet had coating adhesion, coating tension, magnetic characteristics, corrosion resistance, and elution resistance.

On the other hand, in each of Nos. S to AC in which the thicknesses and compositions of the intermediate layer and the tension coating layer were out of the scope of the present invention, at least one of coating adhesion, coating tension, magnetic characteristics, corrosion resistance, and elution resistance was poor.

Field of Industrial Application

It is possible to provide a grain-oriented electrical steel sheet that has no forsterite film, is excellent in coating adhesion, is excellent in coating tension, is excellent in magnetic characteristics, and has sufficient corrosion resistance and elution resistance. Therefore, industrial applicability is high.

Brief Description of the Reference Symbols

1 Base steel sheet
2 Insulating coating
21 Intermediate layer
22 Tension coating layer
100 Grain-oriented electrical steel sheet

**Claims**

1.  A grain-oriented electrical steel sheet comprising:

    a base steel sheet; and
    an insulating coating formed on a surface of the base steel sheet, wherein
    the insulating coating has:

    an intermediate layer formed on the base steel sheet side and containing an amorphous iron phosphate; and
    a tension coating layer formed on a surface side of the insulating coating,
    the intermediate layer has an average thickness of 0.10 to 3.0 $\mu$m, and
    the tension coating layer contains a metal phosphate and silica, and an amount of the silica in the tension coating layer is 20 to 60 mass%.

2.  A method for forming the insulating coating included in the grain-oriented electrical steel sheet according to claim 1, the method comprising:

    a final annealing step of applying an annealing separator containing 10 to 100 mass% of $Al_2O_3$ to a steel sheet, drying the annealing separator, and then performing final annealing;
    an annealing separator removing step of removing an excess of the annealing separator from a surface of the steel sheet after the final annealing step by water washing;
    a light pickling step of pickling the steel sheet after the annealing separator removing step with a mixed acid of two or more types obtained by mixing one or more selected from sulfuric acid, phosphoric acid, and nitric acid, having a liquid temperature of 25 to 85°C, and having a concentration of 0.5 to 10 mass% for 5 to 30 seconds;
    an immersion step of immersing the steel sheet after the light pickling step in a treatment liquid having a liquid temperature of 20 to 70°C and having a phosphoric acid concentration of 2.0 to 15.0 mass% for 5 to 50 seconds;
    a drying step of pulling up the steel sheet after the immersion step from the treatment liquid, removing an excess of the treatment liquid by water washing, and then drying the steel sheet; and
    a tension coating layer forming step of applying, to the steel sheet after the drying step, a coating liquid containing a metal phosphate and colloidal silica such that the colloidal silica is contained in an amount of 50 to 150 parts by mass with respect to 100 parts by mass of the metal phosphate, drying the coating liquid, and then holding the steel sheet at a sheet temperature of 700 to 950°C for 10 to 50 seconds.

3.  The method for forming an insulating coating according to claim 2, wherein
    the annealing separator further contains one or both of 5 to 90 mass% of MgO and 0.5 to 10.0 mass% of chloride.

4. A grain-oriented electrical steel sheet comprising:

a base steel sheet; and
an amorphous iron phosphate layer on a surface of the base steel sheet, wherein
the amorphous iron phosphate layer has an average thickness of 0.10 to 3.0 $\mu$m.

FIG. 1

## INTERNATIONAL SEARCH REPORT

International application No.

**PCT/JP2023/014239**

### A. CLASSIFICATION OF SUBJECT MATTER

*C23C 22/00*(2006.01)i; *C21D 8/12*(2006.01)i; *C21D 9/46*(2006.01)i; *C22C 38/00*(2006.01)i; *C22C 38/60*(2006.01)i
FI:  C23C22/00 B; C21D8/12 B; C21D9/46 501B; C22C38/00 303U; C22C38/60

According to International Patent Classification (IPC) or to both national classification and IPC

### B. FIELDS SEARCHED

Minimum documentation searched (classification system followed by classification symbols)

C23C22/00; C21D8/12; C21D9/46; C22C38/00; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-111814 A (NIPPON STEEL CORP.) 27 July 2020 (2020-07-27) | 1-4 |
| A | WO 2019/155858 A1 (JFE STEEL CORP.) 15 August 2019 (2019-08-15) | 1-4 |
| A | WO 2020/149351 A1 (NIPPON STEEL CORP.) 23 July 2020 (2020-07-23) | 1-4 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/014239**

| Patent document cited in search report | | | Publication date (day/month/year) | Patent family member(s) | | | Publication date (day/month/year) |
|---|---|---|---|---|---|---|---|
| JP | 2020-111814 | A | 27 July 2020 | (Family: none) | | | |
| WO | 2019/155858 | A1 | 15 August 2019 | US | 2021/0035718 | A1 | |
| | | | | EP | 3722460 | A1 | |
| | | | | KR | 10-2020-0105907 | A | |
| | | | | CN | 111684106 | A | |
| WO | 2020/149351 | A1 | 23 July 2020 | US | 2022/0081747 | A1 | |
| | | | | EP | 3913096 | A1 | |
| | | | | CN | 113302318 | A | |
| | | | | KR | 10-2021-0111802 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022063397 A
- JP S4839338 A
- JP S4996920 A
- JP H6184762 A
- JP H11209891 A
- JP H5279747 A
- JP 2020111814 A